# EUROPÄISCHE PATENTSCHRIFT

(11) **EP 2 355 325 B1**
(45) Veröffentlichungstag und Bekanntmachung des Hinweises auf die Patenterteilung: **20.07.2016**
(21) Anmeldenummer: 11000471.0
(22) Anmeldetag: 21.01.2011
(51) Int. Cl.: H02M 3/158, H02J 3/38

(54) **Schaltungsanordnung mit einem Hochsetzsteller und Wechselrichterschaltung mit einer solchen Schaltungsanordnung**
Switching device with a boost converter and inverter switch with such a switching device
Agencement de commutation doté d'un transformateur élévateur de tension et commutateur doté d'un tel agencement de commutation

(30) Priorität: 29.01.2010 DE 102010006124
(43) Veröffentlichungstag der Anmeldung: 10.08.2011
(73) Patentinhaber: Platinum GmbH, 88239 Wangen (DE)
(72) Erfinder: Schill, Christoph, 88213 Ravensburg (DE)
(74) Vertreter: Prüfer & Partner mbB Patentanwälte · Rechtsanwälte

(56) Entgegenhaltungen:
- WO-A1-2006/106417
- DE-A1-102006 014 780
- US-A- 3 459 957
- US-A1- 2005 270 816

## Beschreibung

Die vorliegende Erfindung betrifft eine Schaltungsanordnung mit einem Hochsetzsteller zum Hochsetzen einer bereitgestellten Gleichspannung und eine Wechselrichterschaltung mit einer solchen Schaltungsanordnung. Die vorliegende Erfindung betrifft insbesondere eine Schaltungsanordnung mit einem Hochsetzsteller zum Hochsetzen einer von einem Photovoltaikgenerator bereitgestellten Gleichspannung und eine Solarwechselrichterschaltung mit einer solchen Schaltungsanordnung.

Ein Wechselrichter benötigt zur Erzeugung einer Wechselspannung in der Regel eine Zwischenkreisspannung einer bestimmten Größe. Ein optimaler Wirkungsgrad wird erzielt, wenn diese Zwischenkreisspannung genau an die zu erzeugende Wechselspannung angepasst ist.

Photovoltaikgeneratoren liefern abhängig von Lichteinfall, Temperatur und Anzahl der verschalteten Module üblicherweise eine stark schwankende Gleichspannung. Je breiter der Betriebsbereich der Eingangs-Gleichspannung ist, die ein Wechselrichter verarbeiten kann, desto mehr Möglichkeiten existieren bei der Installation, passende Modulkombinationen zu finden. Häufig ist ein Eingangsspannungsbereich von 1 : 2 bei voller Last bzw. von 1 : 2,5 von Volllast bis Leerlauf wünschenswert.

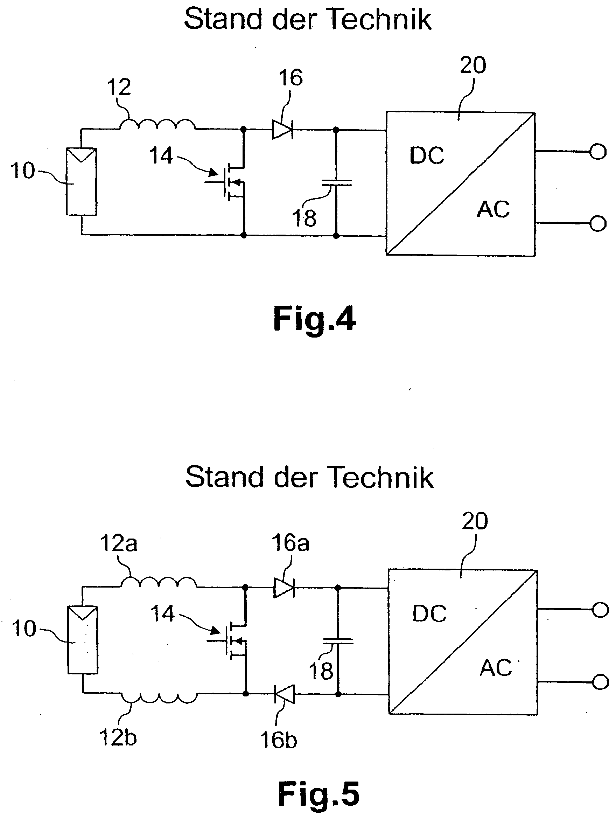

Zur Anpassung der vom Photovoltaikgenerator bereitgestellten Gleichspannung an den Wechselrichter wird daher im Allgemeinen eine Schaltungsanordnung mit einem so genannten Hochsetzsteller verwendet, der die variable Gleichspannung auf eine relativ konstante Zwischenkreisspannung hochsetzt. Der Aufbau einer herkömmlichen Standard-Wechselrichterschaltung (Step-Up-Converter) ist in Figur 4 veranschaulicht.

Ein Photovoltaikgenerator 10 liefert eine variable Gleichspannung. Diese wird mit dem Hochsetzsteller, der eine Drossel 12, einen Leistungsschalter 14 und eine Diode 16 umfasst, auf die Zwischenkreisspannung hochgesetzt, welche an einem Zwischenkreiskondensator 18 anliegt. Der nachgeschaltete Wechselrichter 20 setzt die Zwischenkreisspannung dann in eine Wechselspannung um.

Zum Hochsetzen der Gleichspannung des Photovoltaikgenerators 10 wird der Leistungsschalter 14 periodisch ein- und ausgeschaltet. Das Taktverhältnis wird dabei über eine analoge oder digitale Steuerung so gewählt, dass sich die gewünschte Zwischenkreisspannung einstellt. Wenn der Leistungsschalter 14 geschlossen ist, fließt Strom von dem Photovoltaikgenerator 10 in die Drossel 12 und wird dort zwischengespeichert. Wird dann der Leistungsschalter 14 geöffnet, fließt der Strom von dem Photovoltaikgenerator 10 über die Diode 16 in den Zwischenkreiskondensator 18, wobei auch die zuvor in der Drossel 12 gespeicherte Energie an den Zwischenkreiskondensator 18 abgegeben wird.

Figur 5 zeigt eine Weiterbildung dieser Standard-Wechselrichterschaltung, wie sie zum Beispiel aus der DE 10 2004 037 446 A1 bekannt ist. Die in Figur 5 dargestellte Wechselrichterschaltung unterscheidet sich von der Standard-Schaltung von Figur 4 durch die symmetrische Anordnung von zwei Drosseln 12a und 12b und die zusätzliche Diode 16b, welche aus Symmetriegründen notwendig ist. Die Funktionsweise dieser Wechselrichterschaltung ist gleich jener der oben beschriebenen Standard-Wechselrichterschaltung. Die symmetrische Aufteilung der Drosseln 12a, 12b bewirkt, dass der Photovoltaikgenerator 10 auf einem anderen Spannungspegel gegenüber Erde liegt, was bei bestimmten Solarmodultypen gewünscht ist.

Die Verwendung eines Hochsetzstellers in einer Wechselrichterschaltung führt allerdings auch zu Verlusten, die den Gesamtwirkungsgrad der Wechselrichterschaltung verringern. In der modifizierten Schaltungsanordnung von Figur 5 kommen noch Verluste der zweiten Diode 16b hinzu, wodurch der Gesamtwirkungsgrad noch geringer wird. Darüber hinaus ist die Verwendung eines Hochsetzstellers immer auch mit zusätzlichem Gewicht, Volumen und Kosten verbunden.

Die genannten Probleme dieser herkömmlichen Schaltungsanordnungen treten auch auf bei anderen Arten von Gleichstromquellen und bei direkter Nutzung der bereitgestellten Gleichspannung, d.h. ohne den Einsatz des Wechselrichters.

Eine weitere herkömmliche Wechselrichter-Schaltungsanordnung mit Gleichstromsteller ist in der DE 10 2006 014 780 A1 beschrieben. An den Gleichstromsteller ist ein Photovoltaikgenerator als eine Gleichstromquelle anschließbar. Der Gleichstromsteller wird über eine Steuerungseinheit so gesteuert, dass die gleichstromseitigen Generatorpotenziale ständig symmetrisch zum Erdpotenzial gehalten werden, sodass generatorseitig keine kapazitiven Ableitströme entstehen. Außerdem kann der Gleichstromsteller aus zwei unabhängig steuerbaren potenzialverbindenden Hochsetzstellern aufgebaut sein.

Die US 2005/0270816 A1 zeigt eine Schaltungsanordnung zum wahlweisen Umsetzen einer Gleichspannung aus zwei Gleichspannungsquellen oder einer Wechselspannung in eine Gleichspannung.

Die WO 2006/106417 A1 zeigt in Figur 1 eine Schaltungsanordnung mit zwei Hochsetzstellern für zwei Gleichspannungsquellen.

Die US 3,459,957 A zeigt eine Schaltungsanordnung, welche Batterien als Gleichstromquelle aufweist. Über einen Schalter, welcher durch einen Transistor gebildet ist, können die Batterien wahlweise miteinander in Reihe oder parallel zueinander geschaltet werden. Ein Kondensator summiert die an ihm abfallende Spannung auf. Dabei ist eine Spule vorgesehen, welche nach einer Zusammenführung der aus jeweils einer der Batterien und einer der Dioden gebildeten Zweige angeordnet ist.

Der Erfindung liegt die Aufgabe zugrunde, eine demgegenüber verbesserte Schaltungsanordnung mit einer Gleichstromquelle und einem Hochsetzsteller zu schaffen. Ferner soll auch eine verbesserte Wechselrichterschaltung mit einem Hochsetzsteller bereitgestellt werden.

Diese Aufgabe wird gelöst durch eine Schaltungsanordnung mit den Merkmalen des Anspruchs 1. Vorteilhafte Ausgestaltungen und Weiterbildungen der Erfindung sind Gegenstand der abhängigen Ansprüche.

Die Schaltungsanordnung enthält eine Gleichstromquelle zum Bereitstellen einer Gleichspannung; einen Hochsetzsteller zum Hochsetzen der von der Gleichstromquelle bereitgestellten Gleichspannung; und einen Zwischenkreis, der zwischen den Ausgängen des Hochsetzstellers geschaltet ist. Die Gleichstromquelle umfasst dabei eine erste Gleichstromquelle mit einem ersten Ausgang und einem zweiten Ausgang und eine zweite Gleichstromquelle mit einem ersten Ausgang und einem zweiten Ausgang, wobei der erste Ausgang der ersten Gleichstromquelle mit einer Seite des Zwischenkreises verbunden ist und der zweite Ausgang der zweiten Gleichstromquelle mit einer anderen Seite des Zwischenkreises verbunden ist. Der Hochsetzsteller ist als ein gemeinsamer Hochsetzsteller zum Hochsetzen sowohl der von der ersten Gleichstromquelle bereitgestellten Gleichspannung als auch der von der zweiten Gleichstromquelle bereitgestellten Gleichspannung vorgesehen. Ferner enthält der gemeinsame Hochsetzsteller eine Reihenschaltung aus einer ersten Induktivität (z.B. Drossel) und einem ersten Gleichrichterelement (z.B. Freilaufdiode oder aktiver Leistungsschalter), die zwischen den zweiten Ausgang der ersten Gleichstromquelle und die andere Seite des Zwischenkreises geschaltet ist, sowie eine Reihenschaltung aus einer zweiten Induktivität und einem zweiten Gleichrichterelement, die zwischen den ersten Ausgang der zweiten Gleichstromquelle und die eine Seite des Zwischenkreises geschaltet ist. Erfindungsgemäß ist das gemeinsame Schaltelement des gemeinsamen Hochsetzstellers für die erste und die zweite Gleichstromquelle durch wenigstens zwei Leistungsschalter gebildet, die zwischen die erste und die zweite Gleichstromquelle, insbesondere zwischen die Verbindung zwischen der ersten Induktivität und dem ersten Gleichrichterelement und die Verbindung zwischen der zweiten Induktivität und dem zweiten Gleichrichterelement geschaltet sind. Außerdem ist der Zwischenkreis erfindungsgemäß durch wenigstens zwei in Reihe geschaltete Kapazitäten gebildet.

Bei dieser Schaltungsanordnung wird ein gemeinsamer Hochsetzsteller für eine erste Gleichstromquelle und eine zweite Gleichstromquelle verwendet. Hierdurch ist die Energie, die im Hochsetzsteller zwischengespeichert werden muss bzw. die zirkulierende Blindleistung wesentlich kleiner. Als Folge sind die Verluste des Hochsetzstellers deutlich reduziert, wodurch der Gesamtwirkungsgrad der Schaltungsanordnung steigt. Weitere Vorteile liegen in einer reduzierten Kühlleistung aufgrund des besseren Wirkungsgrades, einer Reduzierung der Belastung der Halbleiterbauelemente des Hochsetzstellers, geringeren Anforderungen bei der Auslegung der einzelnen Bauteile und einer relativ geringen Anzahl benötigter Bauteile zum Erzielen eines hohen Wirkungsgrades.

Insbesondere kann der gemeinsame Hochsetzsteller ein gemeinsames Schaltelement enthalten, das zwischen die erste und die zweite Gleichstromquelle geschaltet ist. Dieses gemeinsame Schaltelement ist zum Beispiel zwischen die Verbindung zwischen der ersten Induktivität und dem ersten Gleichrichterelement und die Verbindung zwischen der zweiten Induktivität und dem zweiten Gleichrichterelement geschaltet. Außerdem ist dieses gemeinsame Schaltelement vorzugsweise ein Leistungsschalter, der mit fester oder variabler Frequenz getaktet werden kann.

Weiter können die erste und die zweite Gleichstromquelle parallel oder in Reihe geschaltete Teilstromquellen einer Gleichstromquelle sein. Beispielsweise sind die erste und die zweite Gleichstromquelle verschiedene (Teil-)Strings eines Solarmoduls bzw. eines Photovoltaikgenerators.

Ferner können die erste und die zweite Induktivität des gemeinsamen Hochsetzstellers wahlweise miteinander gekoppelt oder separat zueinander ausgebildet sein.

Die oben beschriebene Schaltungsanordnung der Erfindung ist in vorteilhafter Weise in einer Wechselrichterschaltung einsetzbar, die neben dieser Schaltungsanordnung einen Wechselrichter zum Umsetzen der von dem Zwischenkreis bereitgestellten Gleichspannung in eine Wechselspannung aufweist. Dabei können mit den Eingangsanschlüssen des Wechselrichters bzw. mit dem Zwischenkreis auch zwei oder mehr parallel oder in Reihe geschaltete Hochsetzsteller verbunden werden.

Durch die Verwendung von wenigstens zwei Leistungsschaltern (d.h. zwei, drei, vier oder mehr Leistungsschaltern) für das gemeinsame Schaltelement des gemeinsamen Hochsetzstellers kann die Spannungsbelastung für die einzelnen Halbleiterbauelemente jeweils deutlich reduziert werden. Dies kann bei einer geeigneten Auswahl der Komponenten zu einem besseren Wirkungsgrad der gesamten Schaltungsanordnung führen.

In einer Ausgestaltung der Erfindung ist eine Verbindung zwischen zwei Kapazitäten des Zwischenkreises mit einer Verbindung zwischen zwei Leistungsschaltern des gemeinsamen Schaltelements verbunden.

Ferner können die wenigstens zwei Leistungsschalter des gemeinsamen Schaltelements synchron getaktet sein.

Alternativ können die wenigstens zwei Leistungsschalter des gemeinsamen Schaltelements separat getaktet sind.

Die erfindungsgemäße Schaltungsanordnung ist in vorteilhafter Weise in einer Wechselrichterschaltung einsetzbar, die neben der Schaltungsanordnung einen Wechselrichter zum Umsetzen der von dem Zwischenkreis bereitgestellten Gleichspannung in eine Wechselspannung aufweist.

In einer Ausgestaltung der Erfindung ist der Wechselrichter mit einer Verbindung zwischen zwei Kapazitäten des Zwischenkreises verbunden.

In einer weiteren Ausgestaltung der Erfindung sind mit den Eingangsanschlüssen des Wechselrichters bzw. mit dem Zwischenkreis wenigstens zwei parallel oder in Reihe geschaltete Hochsetzsteller verbunden.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: eine schematische Darstellung des Aufbaus einer Wechselrichterschaltung;
- Fig. 2: ein Diagramm zur Veranschaulichung der Verbesserung des Wirkungsgrades der Wechselrichterschaltung von Fig. 1 im Vergleich zu herkömmlichen Schaltungsanordnungen;
- Fig. 3: eine schematische Darstellung des Aufbaus einer Wechselrichterschaltung gemäß einem Ausführungsbeispiel der vorliegenden Erfindung;
- Fig. 4: eine schematische Darstellung des Aufbaus einer herkömmlichen Wechselrichterschaltung; und
- Fig. 5: eine schematische Darstellung des Aufbaus einer weiteren herkömmlichen Wechselrichterschaltung.

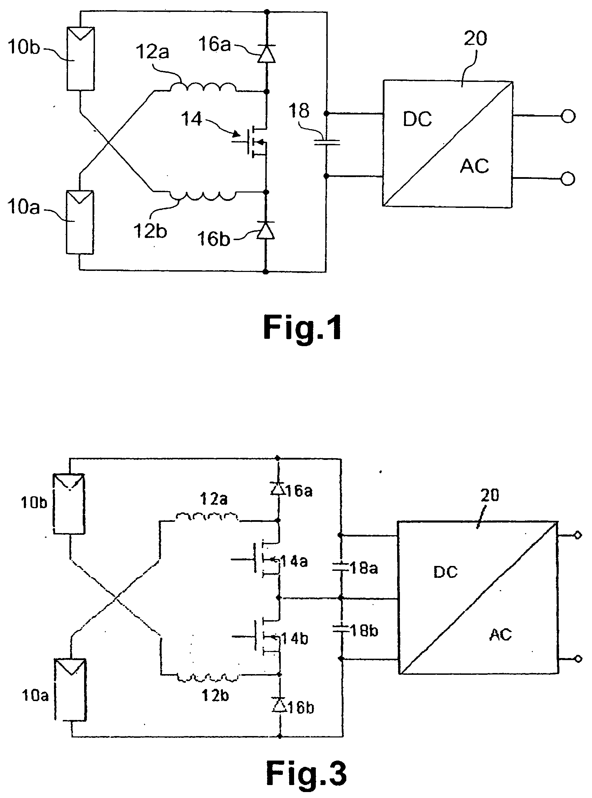

In Figur 1 ist der Aufbau einer Wechselrichterschaltung dargestellt.

Der Photovoltaikgenerator, der die Gleichstromquelle bildet, ist in zwei (Teil-) Strings 10a, 10b aufgeteilt, die jeweils eine Gleichspannung bereitstellen. Die erste und die zweite Gleichstromquelle 10a, 10b sind vorzugsweise symmetrisch, d.h. erzeugen im Wesentlichen die gleiche Gleichspannung, um beste Ergebnisse zu erzielen. Die Spannung je String 10a, 10b bei Volllast liegt typischerweise im Bereich zwischen etwa 50% und etwa 100% der Zwischenkreisspannung. Auf diese Weise wird ein Eingangsspannungs-Bereich von etwa 1 : 2 bei Volllast erreicht.

Die Aufteilung eines Photovoltaikgenerators 10 in zwei Teilstrings 10a und 10b stellt bei Wechselrichtern größerer Leistung keine Einschränkung dar, da ohnehin meist mehrere identische Teilstrings parallel geschaltet sind.

Beide Gleichstromquellen 10a, 10b sind mit einem gemeinsamen Hochsetzsteller 12-16 verbunden, dem ein Zwischenkreiskondensator 18 und schließlich ein Wechselrichter 20 nachgeschaltet sind. Wie in Figur 1 dargestellt, enthält dieser gemeinsame Hochsetzsteller 12-16 eine Reihenschaltung aus einer ersten Drossel 12a und einer ersten Diode 16a, die zwischen einen Ausgang der ersten Gleichstromquelle 10a und eine Seite des Zwischenkreiskondensators 18 geschaltet ist, sowie eine Reihenschaltung aus einer zweiten Drossel 12b und einer zweiten Diode 16b, die zwischen einen Ausgang der zweiten Gleichstromquelle 10b und eine andere Seite des Zwischenkreiskondensators 18 geschaltet ist.

Weiter enthält der gemeinsame Hochsetzsteller 12-16 einen gemeinsamen Leistungsschalter 14, der so zwischen die erste und die zweite Gleichstromquelle 10a, 10b geschaltet ist, dass er zwischen die Verbindung zwischen der ersten Drossel 12a und der ersten Diode 16a und die Verbindung zwischen der zweiten Drossel 12b und der zweiten Diode 16b geschaltet ist. Auf diese Weise liegen die beiden Gleichstromquellen 10a, 10b bei geschlossenem Leistungsschalter 14 in Serie und bei offenem Schalter 14 über die erste und die zweite Diode 16a, 16b parallel. Im Gegensatz zur herkömmlichen Schaltungsanordnung von Figur 5 wird deshalb sowohl bei geschlossenem als auch bei geöffnetem Leistungsschalter 14 Energie in den Zwischenkreiskondensator 18 abgegeben.

Dadurch ist die Energie, die in den Drosseln 12a, 12b des Hochsetzstellers 12-16 zwischengespeichert werden muss, bzw. die im Hochsetzsteller zirkulierende Blindleistung wesentlich kleiner. Als Folge davon müssen die beiden Drosseln 12a, 12b nur etwa halb so groß ausgelegt sein und ist die Belastung des Leistungsschalters 14 und auch anderer Halbleiterbauelemente reduziert. Die Verluste im Hochsetzsteller sind deutlich reduziert, der Gesamtwirkungsgrad der Wechselrichterschaltung ist größer und die erforderliche Kühlleistung ist geringer.

Beträgt die Gleichspannung der beiden Strings 10a, 10b etwa 50% oder etwa 100% der gewünschten Zwischenkreisspannung, so reicht eine statische Serien- bzw. Parallelschaltung der beiden Gleichstromquellen 10a, 10b aus, um die Zwischenkreisspannung zu erzeugen. Es entstehen daher keinerlei Schaltverluste am Leistungsschalter 14. Liegen die Gleichspannungen der beiden Strings 10a, 10b jeweils im Bereich zwischen etwa 50% und 100% der Zwischenkreisspannung, so wird der Leistungsschalter 14 getaktet betrieben. Das Tastverhältnis wird über eine Steuerung (nicht dargestellt, analog oder digital, zum Beispiel eine konventionelle PWM-Steuerschaltung) so geregelt, dass die gewünschte Zwischenkreisspannung entsteht. Das Tastverhältnis kann zwischen 100% (d.h. statische Serienschaltung von 10a und 10b) und 0% (d.h. statische Parallelschaltung von 10a und 10b) variieren.

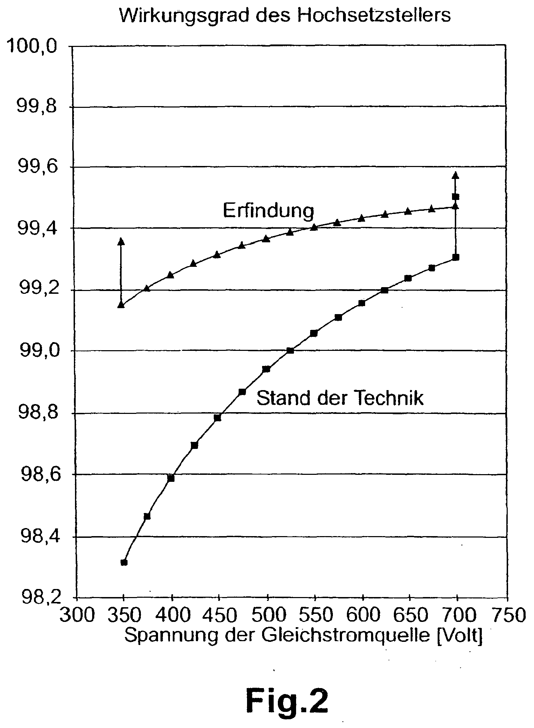

Zur Verdeutlichung der verbesserten Funktionsweise dieser Schaltungsanordnung gegenüber herkömmlichen Schaltungsanordnungen mit Hochsetzstellern zeigt Figur 2 einen Vergleich der Wirkungsgrade der Hochsetzsteller gegenüber den von den Stromquellen bereitgestellten Gleichspannungen. Bei den Betriebsbedingungen Volllast, konstante Taktfrequenz des Leistungsschalters 14 und einer Zwischenkreisspannung von 700 Volt sind die Gesamtwirkungsgrade der Hochsetzsteller 12-16 für die herkömmliche Schaltungsanordnung von Figur 4 (Kurve ■) und die Schaltungsanordnung von Figur 1 (Kurve ▲) aufgetragen. Der Gesamtwirkungsgrad der modifizierten herkömmlichen Schaltungsanordnung von Figur 5 liegt noch etwas unterhalb jenes von Figur 4.

Es sei angemerkt, dass bei einer Gleichspannung von 700 Volt der Hochsetzsteller 12-16 nicht taktet, wodurch die Schaltverluste des Leistungsschalters 14 in beiden Fällen entfallen. Bei der Schaltungsanordnung von Figur 1 ist dies auch bei einer Gleichspannung von 350 Volt durch die statische Serienschaltung der beiden Teilstrings 10a, 10b möglich.

Figur 2 zeigt eindeutig, dass der Wirkungsgrad des Hochsetzstellers und damit auch der Gesamtwirkungsgrad der Wechselrichterschaltung durch die Schaltungsanordnung von Figur 1 bei geringem Bauteilaufwand deutlich verbessert werden konnte. Darüber hinaus ist auch festzustellen, dass die Abhängigkeit des Wirkungsgrades bzw. der Verluste des Hochsetzstellers von der Gleichspannung, die von dem Photovoltaikgenerator 10 bereitgestellt wird, wesentlich geringer ist.

Die Ansteuerung des Leistungsschalters 14 kann wahlweise mit fester oder mit variabler Frequenz erfolgen. Liegt die Gleichspannung der Teilstrings 10a, 10b in der Nähe von 50% oder 100% der Zwischenkreisspannung, so kann die Taktfrequenz des Leistungsschalters 14 zum Beispiel abgesenkt werden, um die Schaltverluste zu verringern. Bei Werten von 50% und 100% der gewünschten Zwischenkreisspannung erfolgt vorzugsweise keine Taktung des Hochsetzstellers, sondern die beiden Gleichstromquellen 10a, 10b werden statisch parallel bzw. in Reihe geschaltet betrieben. Bei einem solchen statischen Betrieb können die Halbleiter zur weiteren Wirkungsgradsteigerung zum Beispiel mit einem Relais überbrückt werden.

Bezug nehmend auf Figur 3 wird nachfolgend ein Ausführungsbeispiel einer erfindungsgemäßen Schaltungsanordnung in mehr Einzelheiten erläutert. Dabei sind gleiche bzw. entsprechende Komponenten mit den gleichen Bezugsziffern wir bei der Schaltungsanordnung von Figur 1 gekennzeichnet.

Die Schaltungsanordnung dieses Ausführungsbeispiels unterscheidet sich von der in Figur 1 gezeigten Schaltungsanordnung dadurch, dass zwischen die erste und die zweite Gleichstromquelle 10a, 10b, genauer zwischen die Verbindung zwischen der ersten Drossel 12a und der ersten Diode 16a und die Verbindung zwischen der zweiten Drossel 12b und der zweiten Diode 16b zwei Leistungsschalter 14a und 14b geschaltet sind. Mit anderen Worten ist das gemeinsame Schaltelement 14 des gemeinsamen Hochsetzstellers 12-16 durch zwei Leistungsschalter 14a, 14b gebildet.

In ähnlicher Weise ist auch der Zwischenkreis aus zwei in Reihe geschalteten Kapazitäten 18a und 18b gebildet.

Ferner ist eine Verbindung zwischen den beiden Leistungsschaltern 14a, 14b mit einer Verbindung zwischen den beiden Kapazitäten 18a, 18b elektrisch leitend verbunden. Außerdem ist der Wechselrichter 20 zusätzlich mit dem Mittelabgriff zwischen den beiden Kapazitäten 18a, 18b verbunden.

Die Spannungsbelastung der in der Schaltungsanordnung verwendeten Halbleiterbauteile kann auf diese Weise halbiert werden. Dies wiederum ermöglicht einen noch besseren Wirkungsgrad der Wechselrichterschaltung, wenn die Bauteile entsprechend geeignet ausgewählt werden.

In einer Ausführungsform können die beiden Leistungsschalter 14a, 14b synchron getaktet werden. Dabei können die beiden Drosseln 12a, 12b entweder separat oder gekoppelt sein.

Diese Variante zeigt ein ähnliches Verhalten wie die Schaltungsanordnung von Figur 1 mit nur einem Leistungsschalter 14. Eine zusätzliche gegenseitige Beeinflussung mit dem Wechselrichter 20 erhält man jedoch über den Mittelabgriff zwischen den beiden Kapazitäten 18a, 18b.

In einer anderen Ausführungsform werden die beiden Leistungsschalter 14a und 14b separat getaktet und sind auch die beiden Drosseln 12a und 12b getrennt.

Bei einer unterschiedlichen Sonneneinstrahlung für die beiden Strings 10a und 10b des Photovoltaikgenerators 10 entsteht eine Asymmetrie zwischen den von den beiden Kapazitäten 18a, 18b des Zwischenkreises bereitgestellten Spannungen, welche vom nachgeschalteten Wechselrichter 20 ausgeglichen werden muss. Die maximal zulässige Asymmetrie hängt dabei ab von der Photovoltaikspannung der Strings 10a, 10b und der Fähigkeit des Wechselrichters 20 zur Stabilisierung des Mittelpunkts zwischen den beiden Kapazitäten 18a, 18b.

Bei dieser zweiten Ausführungsvariante ist es möglich, für die beiden Leistungsschalter 14a, 14b separate Ansteuerungen zum Beispiel in Form von MPPTs (maximum power point tracker) zu verwenden. Allerdings wird die Regelung der Schaltungsanordnung insgesamt etwas komplizierter.

Die Erfindung ist natürlich nicht nur auf das oben beschriebene Ausführungsbeispiel beschränkt. Der Fachmann wird sofort verschiedene Modifikationen und Varianten erkennen, die innerhalb des durch die angehängten Ansprüche definierten Schutzbereichs liegen.

So ist es zum Beispiel denkbar, mit unterschiedlichen Teilstrings 10a, 10b zu arbeiten, indem zum Beispiel unterschiedliche Anzahlen von Solarmodulen in den Teilstrings verwendet werden. Die Hochsetzstellerschaltung 12-16 kann problemlos auch auf diesen Fall ausgelegt werden, auch wenn die Verbesserung des Wirkungsgrades mit größer werdender Asymmetrie nachlässt.

Die beiden Gleichstromquellen bzw. (Teil-) Strings 10a, 10b können wahlweise aus parallel oder in Reihe geschalteten Gleichstromquellen bestehen.

Anstatt der Dioden können als erste und zweite Gleichrichterelemente 16a, 16b wahlweise auch aktive Leistungsschalter eingesetzt werden.

Während in dem Ausführungsbeispiel von Figur 3 jeweils zwei Leistungsschalter 14a, 14b und zwei Kapazitäten 18a, 18b für das gemeinsame Schaltelement bzw. den Zwischenkreis eingesetzt sind, ist es ebenso möglich jeweils drei, vier oder mehr dieser Bauteile zu verwenden.

Der Hochsetzsteller 12-16 kann auch aus zwei oder mehr parallel und gegebenenfalls phasenversetzt arbeitenden Zweigen aufgebaut sein (Multiphase-Betrieb). In diesem Fall können bei Teillast einzelne Zweige ganz abgeschaltet werden, um den Teillastwirkungsgrad zu erhöhen.

Zur Verringerung der Schaltverluste können optional Umschwingnetzwerke eingebaut werden (resonantes Schalten).

Ferner können auch zwei oder mehr Hochsetzsteller 12-16 am Eingang des Wechselrichters 20 parallel oder in Reihe geschaltet werden.

Für den Wechselrichter 20 selbst können verschiedene Topologien eingesetzt werden. Geeignet sind zum Beispiel Halbbrücken (für einphasige Einspeisung) und Drehstrombrücken.

Anstelle der oben beschriebenen Photovoltaikgeneratoren können für die ersten und zweiten Gleichstromquellen 10a, 10b auch andere speisende Quellen verwendet werden. Zum Beispiel sind auch Brennstoffzellen, thermoelektrische Generatoren, elektromagnetische Generatoren, Akkumulatoren, Superkondensatoren und dergleichen als Gleichstromquellen der erfindungsgemäßen Schaltungsanordnung geeignet.

Die erfindungsgemäße Schaltungsanordnung mit Gleichstromquellen 10a, 10b, Hochsetzsteller 12-16 und Zwischenkreiskapazitäten 18a, 18b kann nicht nur in Kombination mit dem nachgeschalteten Wechselrichter 20 verwendet werden, wie in Figur 3 dargestellt. Die Schaltungsanordnung der Erfindung kann in vorteilhafter Weise zum Beispiel auch zur direkten Speisung von Gleichstromverbrauchern oder zur Speisung von Gleichspannungs-Zwischenkreisen in anderen Geräten wie beispielsweise Motorfrequenzumrichtern genutzt werden.

### BEZUGSZIFFERNLISTE

- 10a: erste Gleichstromquelle
- 10b: zweite Gleichstromquelle
- 12a: erste Induktivität
- 12b: zweite Induktivität
- 14: gemeinsames Schaltelement
- 14a: erster Leistungsschalter
- 14b: zweiter Leistungsschalter
- 16a: erstes Gleichrichterelement
- 16b: zweites Gleichrichterelement
- 18: Zwischenkreiskondensator
- 18a: erste Kapazität
- 18b: zweite Kapazität
- 20: Wechselrichter

## Patentansprüche

1. Schaltungsanordnung, mit
einer Gleichstromquelle (10) zum Bereitstellen einer Gleichspannung; einem Hochsetzsteller (12-16) zum Hochsetzen der von der Gleichstromquelle bereitgestellten Gleichspannung; und
einem Zwischenkreis, der zwischen den Ausgängen des Hochsetzstellers (12-16) geschaltet ist,
wobei die Gleichstromquelle (10) eine erste Gleichstromquelle (10a) mit einem ersten Ausgang und einem zweiten Ausgang und eine zweite Gleichstromquelle (10b) mit einem ersten Ausgang und einem zweiten Ausgang umfasst, wobei der erste Ausgang der ersten Gleichstromquelle (10a) mit einer Seite des Zwischenkreises verbunden ist und der zweite Ausgang der zweiten Gleichstromquelle (10b) mit einer anderen Seite des Zwischenkreises verbunden ist; und
der Hochsetzsteller (12-16) als ein gemeinsamer Hochsetzsteller zum Hochsetzen sowohl der von der ersten Gleichstromquelle (10a) bereitgestellten Gleichspannung als auch der von der zweiten Gleichstromquelle (10b) bereitgestellten Gleichspannung vorgesehen ist,
**dadurch gekennzeichnet,**
**dass** der gemeinsame Hochsetzsteller (12-16) eine Reihenschaltung aus einer ersten Induktivität (12a) und einem ersten Gleichrichterelement (16a), die zwischen den zweiten Ausgang der ersten Gleichstromquelle (10a) und die andere Seite des Zwischenkreises geschaltet ist, und eine Reihenschaltung aus einer zweiten Induktivität (12b) und einem zweiten Gleichrichterelement (16b), die zwischen den ersten Ausgang der zweiten Gleichstromquelle (10b) und die eine Seite des Zwischenkreises (18) geschaltet ist, enthält;
**dass** der gemeinsame Hochsetzsteller (12-16) ein gemeinsames Schaltelement enthält, das durch wenigstens zwei Leistungsschalter (14a, 14b) gebildet ist, die zwischen die Verbindung zwischen der ersten Induktivität (12a) und dem ersten Gleichrichterelement (16a) und die Verbindung zwischen der zweiten Induktivität (12b) und dem zweiten Gleichrichterelement (16b) geschaltet sind; und
**dass** der Zwischenkreis durch wenigstens zwei in Reihe geschaltete Kapazitäten (18a, 18b) gebildet ist.

2. Schaltungsanordnung nach Anspruch 1,
**dadurch gekennzeichnet,**
**dass** eine Verbindung zwischen zwei Kapazitäten (18a, 18b) des Zwischenkreises mit einer Verbindung zwischen zwei Leistungsschaltern (14a, 14b) des gemeinsamen Schaltelements verbunden ist.

3. Schaltungsanordnung nach Anspruch 1 oder 2,
**dadurch gekennzeichnet,**
**dass** die wenigstens zwei Leistungsschalter (14a, 14b) des gemeinsamen Schaltelements synchron getaktet sind.

4. Schaltungsanordnung nach Anspruch 1 oder 2,
**dadurch gekennzeichnet,**
**dass** die wenigstens zwei Leistungsschalter (14a, 14b) des gemeinsamen Schaltelements separat getaktet sind.

5. Wechselrichterschaltung, mit einer Schaltungsanordnung (10-18) nach einem der Ansprüche 1 bis 4 und einem Wechselrichter (20) zum Umsetzen der von dem Zwischenkreis bereitgestellten Gleichspannung in eine Wechselspannung.

6. Wechselrichterschaltung nach Anspruch 5,
**dadurch gekennzeichnet,**
**dass** der Wechselrichter (20) mit einer Verbindung zwischen zwei Kapazitäten (18a, 18b) des Zwischenkreises verbunden ist.

7. Wechselrichterschaltung nach Anspruch 5 oder 6,
**dadurch gekennzeichnet,**
**dass** mit den Eingangsanschlüssen des Wechselrichters (20) bzw. mit dem Zwischenkreis wenigstens zwei parallel oder in Reihe geschaltete Hochsetzsteller (12-16) verbunden sind.

## Claims

1. A circuit configuration, comprising:
a DC source (10) for providing a DC voltage;
a boost converter (12-16) for boosting the DC voltage provided by said DC source; and
an intermediate circuit connected between the outputs of said boost converter (12-16),
wherein said DC source (10) comprises a first DC source (10a) having a first output and a second output, and a second DC source (10b) having a first output and a second output, wherein said first output of said first DC source (10a) is connected to one side of said intermediate circuit, and said second output of said second DC source (10b) is connected to the other side of said intermediate circuit; and
said boost converter (12-16) is provided as a common boost converter for boosting both the DC voltage provided by said first DC source (10a) and the DC voltage provided by said second DC source (10b),
**characterized in that**
said common boost converter (12-16) includes a series circuit having a first inductance (12a) and a first rectifier element (16a) and being connected between said second output of said first DC source (10a) and said other side of said intermediate circuit, and a series circuit having a second inductance (12b) and a second rectifier element (16b) and being connected between said first output of said second DC source (10b) and said one side of said intermediate circuit capacitor (18);
said common boost converter (12-16) includes a common switching element being formed by at least two power switches (14a, 14b) which are connected between the connection between said first inductance (12a) and said first rectifier element (16a) and the connection between said second inductance (12b) and said second rectifier element (16b); and
said intermediate circuit is formed by at least two capacities (18a, 18b) connected in series.

2. The circuit configuration according to claim 1,
**characterized in that**
a connection between two capacities (18a, 18b) of said intermediate circuit is connected to a connection between two power switches (14a, 14b) of said common switching element.

3. The circuit configuration according to claim 1 or 2,
**characterized in that**
said at least two power switches (14a, 14b) of said common switching element are clocked synchronously.

4. The circuit configuration according to claim 1 or 2,
**characterized in that**
said at least two power switches (14a, 14b) of said common switching element are clocked separately.

5. An inverter circuit, comprising a circuit configuration (10-18) according to any one of claims 1 to 4, and an inverter (20) for converting the DC voltage provided by said intermediate circuit into an AC voltage.

6. The inverter circuit according to claim 5,
**characterized in that**
said inverter (20) is connected to a connection between two capacities (18a, 18b) of said intermediate circuit.

7. The inverter circuit according to claim 5 or 6,
**characterized in that**
at least two boost converters (12-16) connected in parallel or in series are connected to the input connections of said inverter (20) or to said intermediate circuit.

## Revendications

1. Agencement de commutation, doté de
une source de courant continu (10) pour fournir une tension continue ;
un convertisseur élévateur de tension (12-16) pour élever la tension continue fournie par la source de courant continu ; et
un circuit intermédiaire, qui est monté entre les sorties du convertisseur élévateur de tension (12-16),
dans lequel la source de courant continu (10) comprend une première source de courant continu (10a) avec une première sortie et avec une seconde sortie, et une seconde source de courant continu (10b) avec une première sortie et avec une seconde sortie, dans lequel la première sortie de la première source de courant continu (10a) est reliée à un côté du circuit intermédiaire et la seconde sortie de la seconde source de courant continu (10b) est reliée à un autre côté du circuit intermédiaire ; et
le convertisseur élévateur de tension (12-16) est prévu en tant que convertisseur élévateur de tension commun pour élever aussi bien la tension continue fournie par la première source de courant continu (10a) que la tension continue fournie par la seconde source de courant continu (10b),
**caractérisé**
**en ce que** le convertisseur élévateur de tension commun (12-16) contient un circuit série, composé d'une première inductivité (12a) et d'un premier élément redresseur (16a), qui est monté entre la seconde sortie de la première source de courant continu (10a) et l'autre côté du circuit intermédiaire, et un circuit série, composé d'une seconde inductivité (12b) et d'un second élément redresseur (16b), qui est monté entre la première sortie de la seconde source de courant continu (10b) et ledit un côté du circuit intermédiaire (18) ;
**en ce que** le convertisseur élévateur de tension commun (12-16) contient un élément de commutation commun qui est formé par au moins deux commutateurs de puissance (14a, 14b) qui sont montés entre la liaison entre la première inductivité (12a) et le premier élément redresseur (16a) et la liaison entre la seconde inductivité (12b) et le second élément redresseur (16b) ; et
**en ce que** le circuit intermédiaire est formé par au moins deux capacités montées en série (18a, 18b).

2. Agencement de commutation selon la revendication 1,
**caractérisé**
**en ce qu'**une liaison entre deux capacités (18a, 18b) du circuit intermédiaire est reliée à une liaison entre deux commutateurs de puissance (14a, 14b) de l'élément de commutation commun.

3. Agencement de commutation selon la revendication 1 ou 2,
**caractérisé**
**en ce que** les au moins deux commutateurs de puissance (14a, 14b) de l'élément de commutation commun sont cadencés de manière synchrone.

4. Agencement de commutation selon la revendication 1 ou 2,
**caractérisé**
**en ce que** les au moins deux commutateurs de puissance (14a, 14b) de l'élément de commutation commun sont cadencés de manière séparée.

5. Circuit onduleur, avec un agencement de commutation (10-18) selon l'une quelconque des revendications 1 à 4 et avec un onduleur (20) pour convertir la tension continue fournie par le circuit intermédiaire en une tension alternative.

6. Circuit onduleur selon la revendication 5,
**caractérisé**
**en ce que** l'onduleur (20) est relié à une liaison entre deux capacités (18a, 18b) du circuit intermédiaire.

7. Circuit onduleur selon la revendication 5 ou 6,
**caractérisé**
**en ce qu'**au moins deux dispositifs élévateurs (12-16) montés en parallèle ou en série sont reliés aux branchements d'entrée de l'onduleur (20) ou au circuit intermédiaire.
